# EUROPEAN PATENT APPLICATION

(11) **EP 3 398 853 A1**
(43) Date of publication of application: **07.11.2018**
(21) Application number: 16856978.8
(22) Date of filing: 24.10.2016
(51) Int. Cl.: B64C 39/02, A01M 29/00, A01M 29/06

(54) **BIOMIMETIC AND ZOOSEMIOTIC UNMANNED AIRCRAFT GUIDED BY AUTOMATIC PILOT FOR PRECISION AND/OR PURSUIT FLIGHTS**

(30) Priority: 23.10.2015 ES 201531528
(71) Applicant: Consejo Superior De Investigaciones Científicas, 28006 Madrid (ES); Morente Sánchez, Francisco Juan, 41100 Coria del Río (Sevilla) (ES)
(72) Inventor: MORENTE SANCHEZ, Francisco Juan, 41100 Coria del Río (Sevilla) (ES); FIGUEROLA BORRAS, Jordi, 41092 Sevilla (ES); CASIMIRO-SORIGUER ESCOFET, Ramón, 41092 Sevilla (ES)
(74) Representative: Pons
(86) International application number: PCT/ES2016/070747
(87) International publication number: WO 2017/068224

(57) **Abstract**

The object of the present invention is a biomimetic and zoosemiotic aircraft incorporating sensors and means for detecting and scaring away animals, the main characteristic thereof being that it is equipped with an autopilot programmable in open source code and a reduced-board computer when convenient, which multiply the computing capacity in order to operate complex computer vision algorithms that, together with the on-board sensors, modify the trajectory of the aircraft while it executes movement sequences and activates devices that increase confusion in the pest. This innovative design, able to respond to external stimuli and pursue dynamic objectives, can fly autonomously and continuously, by analysing, relying on and responding to the surroundings thereof with efficiency and confidence. Likewise, another object of the invention is the use of this vehicle in applications such as controlling certain pests, as well as inspecting protected areas.

## Description

### SECTOR AND OBJECT OF THE INVENTION

The present invention falls within the sector of flying devices for applications such as chasing away animals.

Specifically, the object of the present invention is a biomimetic and zoosemiotic aircraft incorporating sensors and means for detecting and scaring away animals, the main characteristic thereof being that it is equipped with an autopilot programmable in open source code and a reduced-board computer when convenient, which multiply the computing capacity in order to operate complex computer vision algorithms that, together with the on-board sensors, modify the trajectory of the aircraft while it executes movement sequences and activates devices that increase the confusion in the pest. This innovative design, able to respond to external stimuli and pursue dynamic objectives, makes its own decisions and oversees the completion of the mission, flying autonomously and constantly, analysing, relying on and responding to the surroundings thereof with efficiency and confidence. Likewise, another object of the invention is the use of this vehicle in applications such as controlling certain pests, as well as inspecting protected areas.

### STATE OF THE ART

Concentrations of wild animals can represent a risk to crops, livestock farms and the well-being of humans and other animals of economic interest or for their conservation. Animals flee from situations that they perceive as a risk to their lives, and being able to reproduce the stimuli that they perceive as threatening is an effective method for scaring them away. The invention aims to reproduce the same actions as those in nature in order to cause predictable reactions in the animals, by means of biomimetic aircrafts that imitate their pure and descriptive zoosemiotics: visual, acoustic, tactile and chemical, by studying zoology, robotics, biomechanics, mechatronics and aeronautics in order to blend into the environment, attract or scare away animals. With blending, natural habitats are not invaded and accurate studies are able to be performed on animal behaviour and discreet pursuits are able to be done with important research applications. Attracting and/or calming animals is interesting in zoological studies, for example, for capturing and taking biological samples from members of threatened species and other applications such as raising livestock; a vehicle with the biomimetic appearance and zoosemiotic behaviour is able to attract members of the same or other species towards areas for capture or observation. Each species, at any time, may require different biomimetic remotely piloted aircraft systems. The available commercial autopilots do not have the ability to make zoosemiotic movements since they are intended to perform simple navigation towards a series of satellite waypoints that have been pre-programmed from a control station by an operator of the system and it is not foreseen that, from a computer, controlled by the sensors of the vehicle, it can autonomously control the flight or imitate biomechanical movements of flying animals and collaborate with other tools that simplify and lower the cost of related jobs and production costs in processes such as: study, control, research, safety, environment, zoology, agriculture, apiculture, raising livestock, fishing.

Remotely piloted aircraft systems (RPA) are a useful tool for scaring away animals when they imitate the shapes and movements of their natural predator or for attracting members of the same species and/or are compatible with their habitats.

As background of the invention the following documents are worth noting:
1) patent document CN 101627752, published on 20 January 2010, which shows a remotely piloted flying device that simulates an eagle for protecting crops. It uses a controller for actuating a motor of a small turbofan that drives the device which, once in the air, is controlled by remote control.
2) Patent document JP 2003304795, published on 28 October 2003, which shows a device that simulates an eagle or a falcon for repelling plagues of birds using their visual and auditory sharpness with flashing eyes, movable tail and loudspeakers which emit sounds of birds of prey.
3) Utility model CN 201563537, published on 1 September 2010, which describes a type of eagle that floats in the sky with speaker means.
4) Patent document US 2005224636, published on 13 October 2005, which shows a kite, shaped like a bird of prey that, upon reaching a certain height, flies around an area.
5) Utility model document CN 2626860, published on 21 July 2004, which shows the use of aeromodelling by remote control to disperse birds in airports, reproducing sounds, ultrasound and lights.

These documents imitate the outer shape of birds of prey in order to scare away other birds. Some attempt to imitate their sounds and their flights by manually actuating a device or through remote-control techniques. However, none of them attempt to simulate their zoosemiotics in order to attract other animals, blend into their habitat or increase fear, since the mere presence of the bird of prey passing through satellite coordinates is not enough. A falconiform, more specialised in an open field, flies in a circle at a certain height with the wings extended. If it imitates accipitriformes, which are opportunists and specialised in wooded areas, their attack would be from behind or from underneath the prey. The movements help to clearly and precisely identify the threat that represents the species reproduced by the aircraft or a fellow member of its species.

More recently, new drones have been developed:
6) Spanish patent application P2012010169 refers to a radio-controlled model aircraft that reproduces the figure of a bird of prey for electronic falconry and aviary control, which is formed from a model aircraft that reproduces as exactly as possible the natural figure of a bird of prey during the reconnaissance flight of its hunting territory. The birds of prey to be reproduced include, according to the types of birds to be combatted, Harris hawks, goshawks and female sparrowhawks during mating season, in order to combat sparrows, goldfinches and, in general, small birds; hawks for pigeons, turtledoves, blackbirds, starlings; for rabbits, rats, moles, eagle owls and imperial or royal eagles. It has a silent electric motor with a very low noise level and high efficiency, which manually controlled by a pilot via radio frequency, or by an autopilot, or by a combination of both, and which is able to take off and fly to the established waypoints in order to carry out the mission and then to land. The airscrews are retractable in order to facilitate gliding and save battery. It incorporates a high-definition camera that makes it possible for the pilot to see in real time what the aircraft "sees", which is achieved thanks to an FPV system installed in the front or on the underside area of the model aircraft, being able to take advantage of the flight, in addition to seeing the evolution of the pest, for security means such as watching over the entrances to the property or to prevent theft or sabotage. It can incorporate a sound mechanism that will be activated or not, with sounds signalling pain, fear and panic of the young birds and chicks of the species to be combatted. The autopilot will be used in nocturnal or diurnal flights. Through the high-definition or computer vision camera a specimen can be followed and even attacked with the goal of increasing fear of the avian pest. The incorporation of toxic and radioactive gas sensors, photographic, infrared and thermal cameras or radar broadens the applications thereof to producing geological maps, jobs related to the environment, agriculture, forestry, zoology, and locating animals.
7) Patent application P201430615 describes a biomimetic and zoosemiotic aircraft comprising a fuselage, which incorporates:
   - at least one electric motor powered by rechargeable batteries and feedback systems
   - airscrew and rotor coupled to the output shaft of the electric motor
   - servomotors for the actuation mechanisms of the mobile parts of the aircraft, including elevators and rudder.
   - triggering systems actuated by servomotors
   - microphones and speaker means
   - photographic, viewing and recording, thermal and/or thermographic and infrared camera
   and it further comprises a configurable autopilot in open source code with control cards and relays, which connected to a ground control base, as well as inertial modules incorporating:
   - digital directional compass
   - gyroscopes
   - magnetometers
   - inertial measurement units
   - barometer
   - telemetry
   - digital compass
   as well as sonar and means for measuring the pressure.

The vehicle preferably mimics falconiformes, accipitriformes or strigiformes. In successive preferred embodiments of the invention, the servomotors actuate the wing and tail mechanisms if the vehicle has a fixed wing, or the swashplate if the vehicle is a helicopter with a single rotor, dual rotors, intermeshed or coaxial, in tandem, multirotor, aerostat or ornithopter.

The configurable autopilot is based on a board, which incorporates a 32-bit microcontroller and communication cards. A Global Navigation Satellite System satellite module enables the craft to navigate through predefined waypoints.

The units for measuring pressure included in the aircraft are selected from among pressure anemometers or a Pitot tubes.

Optionally, the aircraft includes at least one of the following devices:
- solar panels
- radio beacon
- stabilised control camera
- radiofrequency communication system
- shutter control
- joystick control
- live on-screen programmable video link
- motor cone with mirrors when it is used to scare away animals
- ultrasonic wave and/or laser device
- volumetric and heat sensors
as well as means for the lighting of the edges, shapes and dyes that favour mimicry, repulsion or attraction.

The handling of these vehicles requires specialised personnel or autopilots that perform continuous and repeated flights. They are intended to perform safe and stabilised flights via satellite waypoints and, in order to create fear in prey the aircraft is required to be placed at the limit of its safety, acting out attacks similar to that of its predator.

It is therefore essential to overcome these safety mechanisms and introduce technological modifications with functions for which they were not designed.

Likewise, other considerations must be taken into account such as not exceeding the maximum weight at take-off of the current most restrictive legislation (2 Kg.) in order to facilitate the universalisation of the technology and adapt it both to the legislation of European countries that have regulated this activity (such as Spain in Royal Decree-law 8/2014, 4 July regarding civil aircraft flown by remote control), as well as the report on drones published on 24 June 2015 by Work Group Article 29 (GT29) that is presented as a guide for European legislators and even the law passed on 2 April 2015 in Chile (first edition of the DAN 151 law), which leads in regulating the use of RPAS in Latin America.

### DESCRIPTION OF THE INVENTION

In a first aspect, an object of the present invention is a biomimetic and zoosemiotic aircraft, with morphing or non-morphing wings, directed by autopilot, which can be: aerostat, fixed wing, rotary wing (in any of the varieties thereof: helicopter, coaxial, multirotor and gyroplane), with vertical take-off and landing (VTOL), ornithopter and false ornithopter and comprising:
- Fuselage with typical animal anatomical structure.
- Electric propulsion motor/s.
- Flight systems for aerostat, fixed wing, rotary wing and VTOL
- Flight systems for ornithopter and false ornithopter.
- Power system selected among rechargeable batteries, a fuel cell or both simultaneously.
- Backup power source in case the original source and the secondary one fail.
- Feedback systems, preferably solar panels, Joule thief, Bedini motor and/or magnet motor.
- Portable charging base, camouflaged or not.
- Retractable connection system for portable charging station.
- Inertial Measurement Unit (IMU), made up of inertial modules including: digital directional compass, gyroscopes, magnetometers, accelerometers, digital compass and telemetry.
- Global Navigation Satellite System (GNSS).
- Control cards, servomotors and relays, for mechanisms for triggering and actuating mobile portions.
- Digital anemometer.
- Barometer.
- Differential pressure sensor.
- Distance sensors.
- Temperature and relative humidity sensor.
- MQx gas, smoke, chemical, and radioactivity sensor.
- Optical sensors
- Microphone, amplifier and speakers
- Sonar (Sound Navigation And Ranging).
- Communications module including analogue video transmitter and receiver, circular polarisation antenna and wireless connection modules.
- Reduced-board or single-board computer (SBC).
- Arduino board.
- I/O expansion board (PiFace Digital).
- LED strobe lighting system (chip-on-board)
- Active or passive RFID card (Radio Frequency Identification).
- Radio beacon.
- Laser devices.
- Pressure pump.
- Expulsion tank and/or duster/remover.
- Chemical fumigator.
- Retractable connection system for portable charging station.

The characteristics that differentiate the object of the present invention from the devices of the state of the art are:
- The GPS system is real-time kinematic.
- Morphing wings: flight feathers and tail, primary feathers and patagium that are able to be actuated by means of servomotors or relays.
- The laser devices are guns and spirographs
- Fibre optics are applied in order to highlight colours and anatomical areas.

The aircraft additionally includes:
- water gun
- soap bubble gun
- pyrotechnic launcher

In successive embodiments of the invention some configurations of all these elements are described:
- When fuel cells are used for power, those with proton-exchange polymer membranes are selected.
- The feedback systems are selected from among solar panels, Joule thief, Bedini motor or magnet motor.
- The distance sensors are selected from among ultrasonic, infrared and laser, or combinations thereof.

In an especially preferred embodiment of the invention, the light detection and ranging module is Lidar-Lite.
- The optical sensors can be: monocular and/or stereoscopic, FPV (First Person View), thermal or infrared, ultraviolet, video and photographic vision.
- The spirographs with LED laser can be:
   - Of the type of two motors with two gears that create two movements around themselves in one stationary Cartesian axis forming circles and Lissajous figures.
   - Of the type of one motor that makes a gear rotate to which the laser is connected that generates a beam perpendicular to the vehicle.
- The laser gun has two vibrated mirrors to achieve a multitude of points.
- The vehicle has a retractable system for the primary feathers and the patagium, lateral flight feathers or tail, consisting of a tensor cable in a tube, connected to both wings, which runs along the leading edge and is connected to a servomotor which overcomes the tensor spring of the primary feathers and the extender spring of the patagium, as well as that of the flight feathers.

Likewise, another object of the invention is the use thereof to scare off animals. To do so, models are chosen of the Falconiformes, Accipitriformes or Strigiformes orders and the family, genus and species that they fear the most. In some cases, RPAS (Remotely Piloted Aircraft Systems) mimicking any animal, even a non-flying one, are effective. This invention has advantages with respect to the commercial devices available: movement and simulation of real attacks that are typical of each species, modifying even the anatomy thereof and combining the reading of satellite signals with those from the microprocessor and the sensors.

The aircraft can be operated with the ability to pursue and navigate via satellite points or even with the ability to pursue and navigate autonomously.

### BRIEF DESCRIPTION OF THE FIGURES

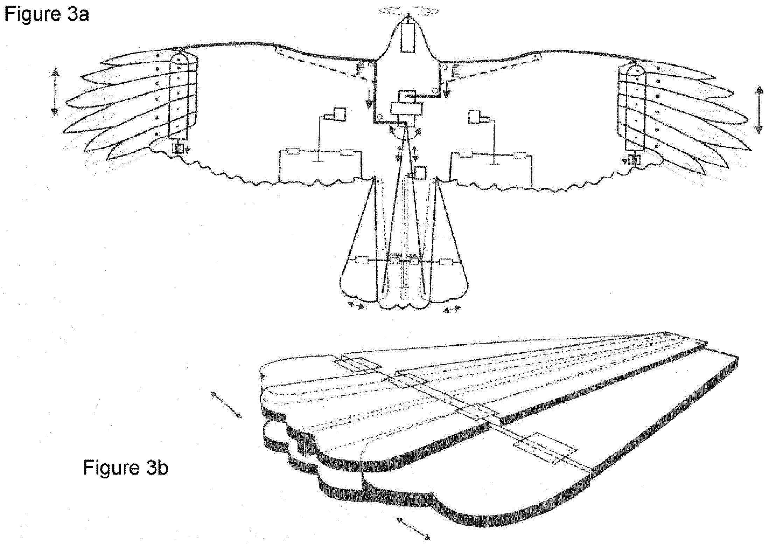

**Figure 1****:** Configurations of the aircraft
   a) fixed wing; b) coaxial rotary wing; c) and d) VTOL (vertical take-off and landing)
**Figure 2****:** False ornithopter aircraft
   a) general view of the drone; b); c); d) and e) type of movement, wherein the position of the neck and feet can be seen
**Figure 3****:** Representation of the morphing wings of the aircraft
   a) general view of the primary feathers and patagium, flight feathers and tail; b) more precise view of how the tail works
**Figure 4****:** Laser devices
   a) laser gun; b) Spirograph laser with one motor; c) Spirograph laser with two motors
**Figure 5****:** Soap bubble gun
**Figure 6****:** Pyrotechnic launcher
   a) using gravity; b) for rockets
**Figure 7****:** Configuration of the blades of the propellers with small notches and toothed edge to facilitate penetration in the air.
   a) notches and toothed edge to facilitate penetration in the air
   b) expanded polyolefin circles
   c) grate system
   d) aircraft with blinds or shutters
**Figure 8****:** Sparrow hawk with tri-rotor rotary wing

### EMBODIMENT OF THE INVENTION

### Common characteristics for all different types of aircraft

In the description of the modes of operation that follows the execution orders of the autopilot will be expressed in cursive, such as: *manual_control_setpoint, altitude_estiamtor_ekf* and others.

The system is developed in an open source code software with access to the source code, where the programs are created and they make modifications for the interactive devices that enable the reading and control of any sensor, switch or physical actuator, with a modular architecture divided into two parts: that of the operating system, with the application of the autopilot, and the control of sensors with overlapping loops for the feedback thereof. The autopilot (*Pixhawk* model from the *3D Robotics* company) incorporates: advanced *ARM Cortex M4*® microprocessor with 32 bits of the STM32F427, 168 KB of RAM to 256 MHz, 2 Mb of Flash memory, ST *Microelectronics*®*,* sensor technology, a real-time *NuttX* operating system. IMU *(Inertial Measurement Unit*), inertial modules incorporating: digital directional compass, gyroscopes, magnetometers, accelerometers, digital compass and telemetry. These processing units have multi-threading capacity with support in hardware, a Unix/Linux programming environment and new functions such as flight programming and missions in a *Lua scripting* language, with a personalised PX4 conducting layer that facilitates the integration of any physical actuator through a port controller and UART devices in series (Universal Asynchronous Receiver-Transmitter), I2C (Inter-Integrated Circuit) and CAN (Controller Area Network), 14 PWM outputs to servos (6 high-power auxiliaries that are configured in *BRD_PWM_COUNT*), digital speed sensor, external magnetometer (3-axis 14-bit*ST Micro LSM303D*), a gyroscope (3-axis 16-bit*ST L3GD20)* and a three-axis accelerometer/gyroscope integrated into the same silicon (*Invensense MPU 6000*) with a digital on-board movement processor (*DMP*) able to process complex *MotionFusion* algorithms and access magnetometers and external sensors without intervention from the processor through the I2C bus. The optical flow sensor (PX4-FLOW, for which it creates a driver and source file), together with the inertial sensors, the combination of measurements from the gyroscopes, the visual information from the cameras and, assisted by the rest of the sensors if necessary, they can also carry out the mission. Furthermore, it incorporates: OSD (On Screen Display), control cards and relays connected to a ground control station (CGS), configurable GPS-RTK (Real Time Kinematic), with open source code, which uses the kinematics in real time and the first step of which will be acquiring the PPS signal (Precise Positioning Service) and coordinating the time with the clock of the *nuttx* system, apart from automatically identifying and admitting all the peripherals thanks to the input from the PPM signal (Pulse Position Modulation) that connects the channels by an input cable from the receiver of the transmitter.

The communications are based on TCP transport protocols (Transmission-Control-Protocol), providing the confirmation and necessary reliability between the IP (Internet Protocol) and the application in order to guarantee safe and error-free communication, and UDP (User Datagram Protocol) that sends information without prior connection for transmitting audio and video in real time, when it is not possible to perform retransmissions due to the delays produced in these cases because the system is connected to the Internet by means of the Dynamic Host Configuration Protocol of the IP for IPv6 (*DHCPv6*) and with the radio link thereof they act as DHCP relay agents. The network layer and application layer are interconnected by means of an Application Programming Interface (*API*) in order to obtain a fluid communication system.

Furthermore, there can be FPV, transmitter and receiver for analogue video with circular polarisation antenna and wireless connection modules of 2.4 GHz, 900 MHz or 433 MHz, based on the biomimetic design and the missions. The firmware enables the installed components of the hardware such as the sonar to be activated or deactivated. The communication between the flight controller and the SBC is done through the MavLink protocol (Micro Air Vehicle Link) that orders it at first while it can in turn be controlled from the CGS and the movements thereof can be programmed and seen in mapping environments such as Google Earth.

When more realism is needed in the attack, it has a retractable tail and morphing wing system, both for the primary feathers and the patagium as well as for the flight feathers and the tail, consisting of a connected tubed tensor cable that connects them on the leading edge and the fuselage, respectively, to a servomotor with enough power to overcome the tensor spring of the primary feathers, the extender spring of the patagium and that of the lateral flight feathers that are stuffed into the underside.

The multiple combination of these morphing devices, spoilers, alterations of propulsive power and triggering mechanisms mentioned, are executed once the data from the flight mode, current and requested orientation, is collected or, when *mc_att_control* emits the orientation and acceleration calculations that it sends to the propulsion and to *actuator_controls,* so that it may activate the orders: video and/or photography, launching of parachute (*CHUTE_ENABLED, CHUTE_TYPE*, *CHUTE_SERVO_* and *CHUTE_ALT_ MIN*), fumigation (*SPRAY_ENABLE*), retractable landing gear (*LGR_SERVO_RTRACT* and *LGR_SERVO_DEPLOY*), in the desired waypoints and actuating the mechanisms that improve the perception of the start of an attack and increase the tension, fear, panic or attraction. In order for the model aircraft to move the head thereof, the servos thereof are connected to *DO_SET_SERVO* (except if it has a fixed wing and the propulsion system is incorporated into the beak, in which case this order acts on the servos of the spoilers and/or another device). On the inside there is a gimbal which can have installed: the cameras, gun and/or laser spirograph, in which case it is connected to *DO_SET_RELAY* and in *DO_REPEAT_SERVO* the servo number and activation time are established, in *DO_CONTROL_VIDEO* the gun and/or laser spirograph and/or sound are activated. The fibre optics, fumigator, ejector/duster, water and soap bubble gun, are activated by *SPRAY_ENABLE.* The order *DO*_*DIGICAM_CONTROL* that can be used to activate only once every time it is claimed brakes and/or cancels a motor in order to simulate an acrobatic pursuit at the same time that it is coordinated with the retraction of the primary feathers and/or patagium (in fixed-wing craft it is configured to accelerate, cut the servo of a spoiler and activate devices). In order for the water gun, rocket launcher, gun and/or laser spirograph to point towards a certain place until the next waypoint, *DO_SET_ROI* and *DO_MOUNT_CONTROL* are used. There are multiple combinations.

In order to save energy until triggering of an event, in an asynchronous way, which is independent of the source code that is being read, and to solve timing and reading problems of the rotary codifier without losing a pulse, the interruptions of the board are used (that are disabled with the order *detachInterrupt*) which cause a continuous reset when the counter reaches zero and is used to regulate the time of an event, such as for example: in order to avoid obstacles without needing to stop the system to continuously measure the distances, or when it executes a long source code and the interruption appears. The program will go back to the associated source code and will continue from the part that it was executing when the interruption appeared (even if it loses the execution time of the *delay* or *millis* functions, although it will always be able to use the *delay Microseconds* function). Thus, the source code is kept from returning a value using *void* (*setup* or *loop*) and indicating the compiler to not save the value of the variable, implementing a volatile variable that forces it to be updated in the memory. In order to prevent false triggers without increasing the devices that increase consumption, space and weight, a delay of milliseconds is added to the software in the response time.

According to the design, a logical variable is also introduced in certain devices so that sometimes it opens them and other times it closes them. In order to not introduce the source codes again while the interruption is executed and to prevent the sensor recalibration when the setup is started, the data is memorised in one byte which relegates the bits thereof in order to locate it as the one with the higher weight and, through USART (Universal Synchronous and Asynchronous serial Receiver and Transmitter), a (synchronous or asynchronous) communication is established which is saved in the *EEPROM.h* when Arduino is installed. In order to request this information, a variable with the value 0 is created and saved in another auxiliary with an OR order. The bits thereof, set to the left and stored in the desired position are cleaned with another logical OR action. In order to test interruptions of sensors that do not deliver 0 or 1 (high/low) such as those for temperature and humidity, and make it so they are triggered after every measurement, the connection pin is chosen and is connected to that of the sensor in parallel with the base of a BJT (bipolar junction transistor), the common transmitter of which is protected with a resistor, such that it acts as an electrical power source, controller and switch for servos and motors when values greater than the ones provided by the system are needed. This configuration can also be used to alter measurements and communicate incorrect data of the sensors in order to cause sharp corrections in the pilot when the craft is considered to be in danger. Additionally, and according to the vehicle and the mission, an I/O expansion board (PiFace Digital) that will be connected to the GPIO Socket (General Purpose Input/Output) of the RPi board can be integrated in order to know the status of the switch or sensor, writing its own order so that the suitable decision is taken.

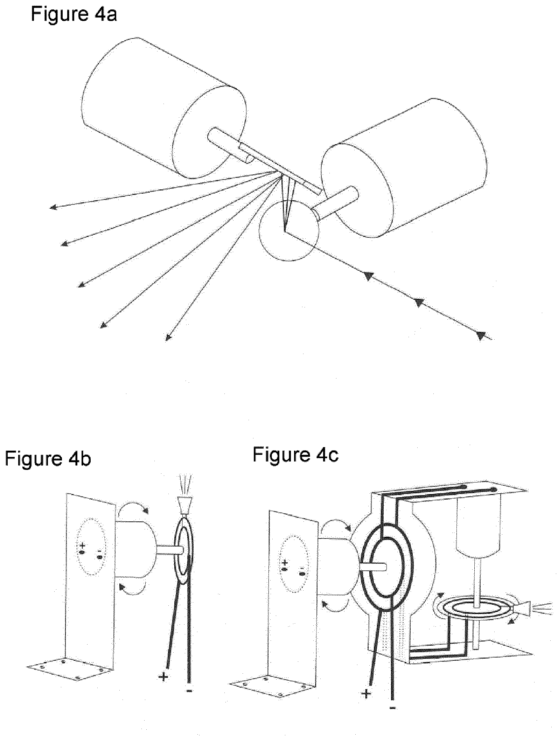

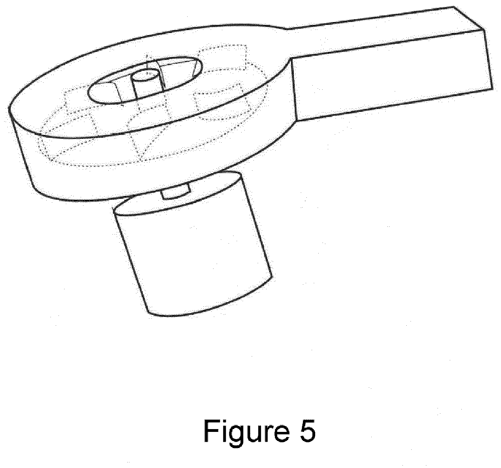

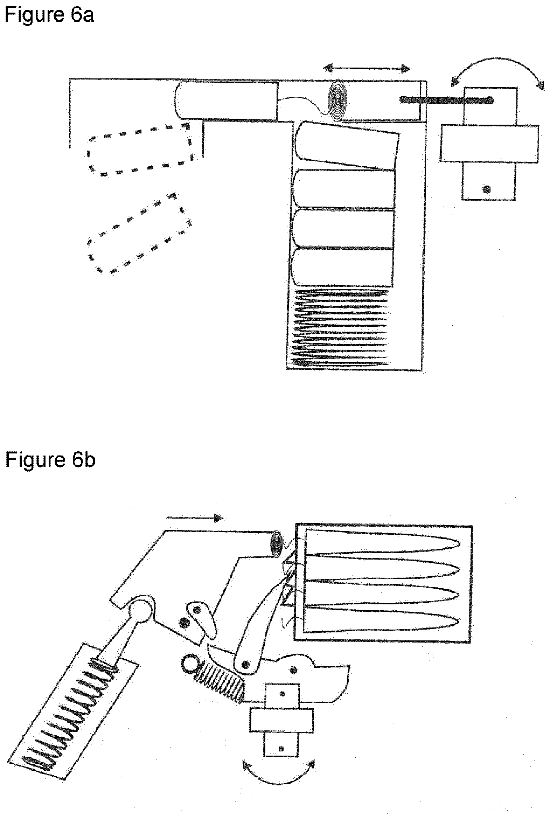

Mechanisms designed to increase fear include:
1.- fibre optics to highlight colours and anatomical areas.
2.- laser gun (see Fig. 4a), which has two mirrors vibrated by two motors, the speed of which determines the homogeneity of the beam.
3.- Two types of laser spirographs have been designed (Fig. 4b and 4c): the first one has two motors with two gears that create two movements around themselves in one stationary Cartesian axis creating countless circles and Lissajous figures. The second one has one motor that makes the laser rotate which forms a beam perpendicular to the aircraft.
4.- The water gun, based on Pascal's principle, is made up of a compression chamber with a trigger that a servo pulls on.
5.- Soap bubble gun (Fig. 5), made up of a servomotor that moves a lever in order to make the first bubble and activates the motor with a fan that creates a regulated current of air with constant bubbles, when it passes in front of a scored ring that is kept wet with the liquid thanks to a small pump connected to the other end of the motor, which extracts it from the tank and which is isolated and sealed when it is screwed into the fuselage.
6.- For the pyrotechnic launching (Fig. 6a and 6b), a 12-volt electrical igniter based on the Joule Effect has been designed with a resistor that, pushed slowly by a servo, touches metal connections that start the wick. When it is withdrawn, it releases the outlet trapdoor causing it to fall. It is quickly closed when the igniter passes an end-of-stroke tab. Meanwhile, the next firework falls and is situated in the chamber. For the launching of pyrotechnic rockets, a cylinder has been designed that rotates around a gear connected to a servomotor in each rocking movement of the igniter.

In order to take advantage of the flights while animals are being scared away and to perform other functions for agriculture, the following have been designed:
1.- Expulsion tank and/or duster in order to launch repellents, attractants, perform small sowing operations, biological and chemical fumigation, irrigation, and fertilisation, and which is comprised of a hopper and a wide mouth for the quick loading that rotates on itself and that works, using either gravity or forced air, with a regulating hole having a variable cross section that determines the amount of solids and/or invertebrates to be distributed in a smooth and constant manner.
2.- For chemical fumigation it has an electric motor and centrifugal sprayer with a rotating head.
3.- LED strobe lighting system (*chip-on-board*) for non-cooperative environments.

### Implementation of the Arduino board

If an Arduino board is implemented, *Phyton* (*sudo apt-get install python-serial*) is executed with the *PySerial* library and Arduino becomes the sensory portion responding with *serial.writeln* to the status of the sensor, while the *RPi* distributes the directions. When the design requires the incorporation of a concentrating module for expansion of the E/S serial port, the number of download communication interfaces accessible from a host is increased, since it has a double USB port with an UART/245FIFO/SPI/I2C/JTAG/GPIO interface convertor, enabling the connection and expansion of devices in zoosemiotic packets that are digitised and grouped into the library created for this purpose. In certain prototypes, an *Arduino Uno* board has been implemented with a relay card with eight outputs (*1280-2560 ARM PIC* model). In order to save energy until triggering an event, in an asynchronous way event and regardless of the code that is being read and to solve timing and reading problems of the rotary codifier without losing a pulse, the interruptions of the board are used so that the program returns to the associated source code and continues from the part that it was executing when the interruption appeared (although it loses the execution time of the *delay* or *millis,* functions, although it will always be able to use the *delay Microseconds* function). Thus, the source code is kept from returning a value using *void* (*setup* or *loop*) and indicating to the compiler to not save the value of the variable, implementing a volatile variable that forces it to be updated in the memory. In order to prevent false triggers without increasing the devices that increase consumption, space and weight, a delay of milliseconds in the response time is added to the software. In selected designs, a logical variable is also introduced in certain devices so that sometimes it opens them and other times it closes them. In order to not introduce the codes again while the interruption is executed and to prevent the sensor recalibration when the setup is started, the data is memorised in one byte which relegates the bits thereof in order to locate it as the one with the most weight and, through USART (Universal Synchronous and Asynchronous serial Receiver and Transmitter), (synchronous or asynchronous) communication is established which is saved in the Arduino *EEPROM.h.* In order to request this information, a variable with the value 0 is created and saved in another auxiliary with an OR order. The bits thereof, set to the left and stored in the desired position are cleaned with another logical OR action. In order to test interruptions of sensors like those for temperature and humidity that do not deliver 0 or 1 (high/low), and make it so they are triggered after every measurement, the connection pin is chosen and is connected to that of the sensor in parallel with the base of a BJT (bipolar junction transistor), the common transmitter of which is protected with a resistor in order to act as an electrical power source, controller and switch for servos and motors when loads greater than the ones provided by the system are needed. This configuration can also be used to alter measurements and communicate incorrect data of the sensors in order to cause sharp corrections in the *Pixhawk* when the craft is considered to be in danger. In the aircraft that lack connection pins due to excess sensors, one or more synchronous 74HC595 circuits can be used, and not only these.

In a basic zoosemiotic configuration, any physical actuator to the output of an asynchronous device (such as Arduino) is connected to one of the orders, while an action is executed successively with each tick of the clock.

### Silencing of the propulsion

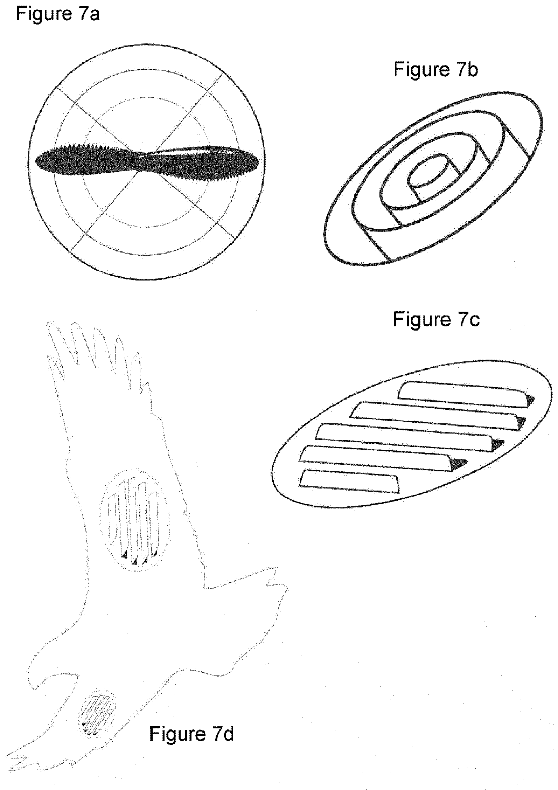

When reducing the buzzing of the motors is necessary (Fig. 7a, b, c and d), especially in fixed-wing RPAs, the blades of the propellers have been prepared with small notches and a toothed edge in order to facilitate penetration in the air and a series of concentric circles has been manufactured from expanded polyolefin (EPO) on the lower side so that the motors are only visible from a vertical point of view. In other cases, sheets, blinds or grates have been manufactured that stay closed due to the counterweight thereof when the motors are not activated, increasing gliding and reducing friction. In order to protect it from rain, it has an oversized cap on the upper side.

### Ground sensor or device

In order to combat difficult pests and increase the security of the property, a fixed device placed on the ground has been envisaged, camouflaged or not, which can start or interrupt the mission of the RPA when the presence thereof is requested by means of MavLink (in the RPA *xml* files of which some of the zoosemiotic actions are structured, packed and started). To make this call, the MavLink of the RPi of the ground sensor sends the coordinates (*WAYPOINT_SET_CURRENT*) and the RPA answers the CGS with *WAYPOINT_CURRENT.* Although the format of the *waypoint* file does not belong to MavLink, it is used by *Mission Planner,* for which reason the spaces between numbers and the fields are taken into account (<Tab>, "\ t"). The coordinates arrive at the *commander* which in turn communicates them to *home_position* which accepts them as coordinates of the mission thereof. Afterwards, it designs the route with *navigator* and the latter informs *position_setpoint_triplet* while the position controller studies the acceleration necessary to maintain the altitude, yaw and pitch so that it heads to the sensor by *position_setpoint_triplet.* The RPA having appeared and, after an established wait time, with repulsion (or attraction) devices being activated or not, it lands (*mc_pos_control*) and/or continues the mission thereof. This request is made remotely by the wireless bi-directional interface (*Xbee Pro 900 HP* and *XCTU* software), which possesses a dual transceiver, integral *SMA* antenna and a smart adaptor connected to the USB port of the RPi, achieving a reduction in the energy consumption when the wireless function is resting or inactive (*Sleep Mode*)*.* The information is sent in *Unicast* and not *Broadcast,* in order to obtain a return receipt of the *ACK* confirmation signal (*Acknowledgement*)*.* In any case, it is sent twice with a time delay in order to ensure it is received. Of all the data received, the system looks for that of the GPS (*id=24 -GPS_RAW_INT*) which provides the real-time position that, upon being processed by *pymavlink,* facilitates the programming when decoding the messages received. This sensor, which is also used as an advanced observation post, alarm and/or as a reinforcing element of the attraction or the fear when faced with its predator and is strategically located to stay for long wait periods outdoors. For semi-covered crops, it has magnets for quick securing on the metal structures. It has been manufactured from fibreglass, resin and polyurethane in order to maintain the thermal insulation thereof and resist humidity. Apart from the batteries, amplifier and speakers, it can incorporate the following according to the missions: a portable charging base connected to the electrical grid and/or feedback systems (solar panels, Stirling motor, Bedini motor and Joule thief), microphones, laser gun, laser spirograph, water and/or soap bubble gun, and sensors: laser, thermal or infrared and/or ultrasonic, radioactive, for temperature and humidity, for MQX gas, smoke and chemical, and optical (cameras of: vision, thermal, ultraviolet, for video and photography). RFID cards (Radio Frequency IDentification) as well as charging outputs to add any other triggering device. The parameters are saved in the RAM memory, micro SD or in the hard drive or EEPROM of the RPi which triggers the pertinent relays when a threat approaches or the RPA enters the action radius of the sensors thereof and/or the emitter is coupled with the RFID card thereof.

Several forms of configuration have been designed with attention to the drone type and assigned mission:

### 1.- First biomimetic design: false ornithopter.

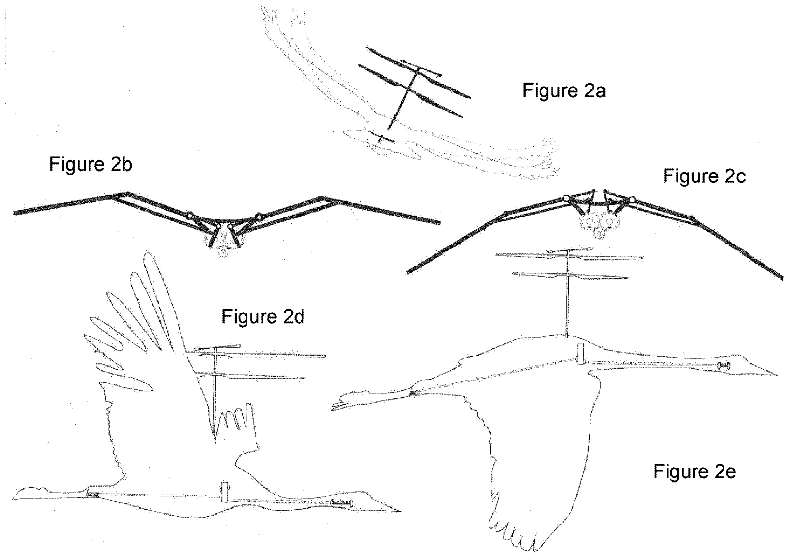

It is (see Fig. 2a, b, c, d and e) a biomimetic model aircraft with a rotary wing which guarantees and coordinates the lift, whether by mechanical connection or electrical motor, with the alar movements in order to obtain the aesthetic function, although not propulsive, and transmit the minimum alar effort to the rest of the body in order to achieve movements that are smooth, flexible and believable. An independent electric motorisation has been preferred, the gear system of which has a rack joined to the motor that connects to two wheels pertaining to each one of the wings. The speed thereof is coordinated with the one established by the autopilot that, without restrictive intention, has been connected in parallel with the propulsion and the current reduced with a control card to which an accelerating/decelerating ramp circuit has been added, or by using the *Stepper.h* library of the Arduino to control the motor. If necessary, an NPN transistor is installed in an open collector in order to provide more current than the Arduino offers. In order to simulate the characteristic movement in flight of the necks of birds such as cranes and storks, the head, joined to a tensor spring, is fastened to a rod that is in turn encased in a rigid tube with a larger diameter than the rest of the fuselage, which is in turn introduced into a semi-flexible plastic that simulates the cervical vertebrae. When the wings go down, the gears, which have a protrusion or crest on one side, push a piston that enlarges the head, tenses the steel cable that maintains the curve of the vertebrae and smoothly releases the pressure when the wings start to go up, shrinking the neck again but keeping the head straight. Meanwhile, on the other side of the gears, the protrusions or crests push a rod that lightly lowers the tail and feet.

### 2.- Second biomimetic design. Activation of zoosemiotic packets, whether in a preventative manner, or by the sensors or by combining both designs.

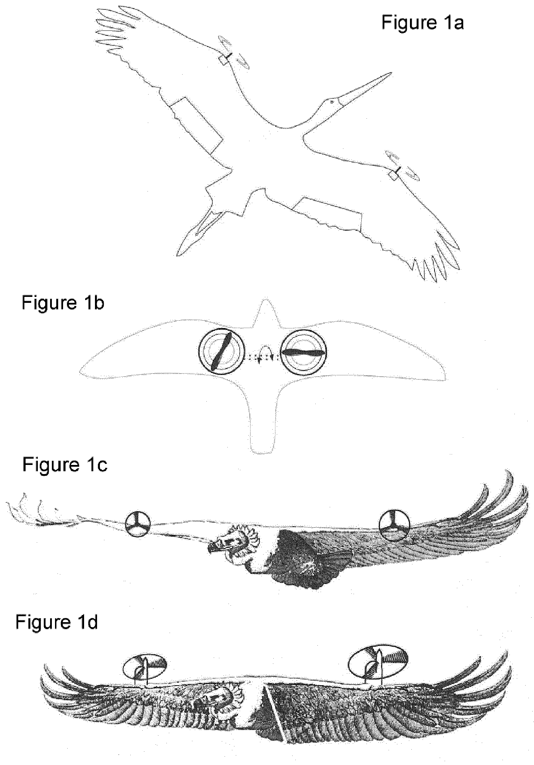

This design can be installed on any type of model aircraft (see Fig. 1a, b, c and d), for example, a sparrowhawk.

When the firmware (*Mission Planner*) is introduced into the control card of the autopilot, the directional compass and the electronic speed controllers (ESC or CES) are calibrated so that the motors rotate at the speed requested by the *Pixhawk,* the minimum and maximum PWM (pulse-width modulation) values are established which the flight controller sends. In some cases, these regulators are what are modified in order to perform spins (*MOT_SPIN_ARMED*). The pilot enables data from the IMU and the GPS to be combined with other speed sensors in order to calculate a reliable position by using an EFK (Extended Kalman Filter) which studies the errors of the sensors, integrates the angular data from the IMU to calculate the position thereof and the accelerations to calculate the speed. This design works in *Mission mode* and enables the zoosemiotic packets to be executed:
1.- in a preventative manner in the established waypoints.
2.- when indicated by the sensors and
3.- by combining both designs.

The control orders are received, by a link in the PX4IO module, or by a link in MavLink because it uses customisable libraries in the on-board systems and ground devices by means of a bidirectional communication with low computational cost. In both cases, *manual_control_setpoint* approves the orientation data, which does not pass directly to the motors until the current orientation has been studied, to avoid sudden changes that can cause unstable flights. Here is where *attitude_estimator_ekf* intervenes which edits the current roll, pitch and yaw data in *vehicle_attitude* so they can be used by *mc_att_control* which, in order to calculate the orientation thereof, requests the data from the sensors and *attitude_estimator_ekf* is subscribed to *sensor_combined* and here is where *sensors* appears with the range of measurements modified by calculation (so that it interprets that it is at risk) or not, from the sensors connected to the pilot. To do so, an application has been created (*rc.txt* for the motorisation) with some *PID* controllers that do not use applications from the *navigator* command or, it is actuated in the source code (_*app*), in *vehicle_attitude_inpur_rc* and *orbes_sensor_combined* which receives the information from the sensors and edits it so that the *PWM (*/*dev*/*pwm_output)* command activates them, and uses /*dev*/*px4fmu* or /*dev*/*px4io,* depending on the outlets to be used (while *UMF mode_pwm* is added). In order to execute the orders from /*app,* MavLink is used to intervene and they update commands in *rc.txt* (such as *ttyACM0*). In other designs, the 3DR camera control board (*3DR CCB*) and the PTP (*Picture Transfer Protocol*) thereof are used, the channels and states thereof are prepared in MavLink, the codes of which (*cam_ctrl_state.shot*) are established in 1 in order to trigger it at 0 and the triggers in the waypoints with the digitised zoosemiotic events (*MAVILINK_MSG_ID_DIGICAM_CONTROL*)*,* taking advantage of orders such as: *cam_ctrl_state.Session*, *cam_ctrl_state.zoom_pos*, *cam_ctrl_state.focus_lock,* and, *cam_ctrl_state.Shot*, which activate or deactivate: devices, servos, motors and sounds, depending on the mission.

### 3.- Third biomimetic design: navigating and pursuing via satellite points (waypoint).

Just like in the previous case, this design can be installed on any type of model aircraft (see Fig. 1a, b, c and d), for example, a sparrowhawk.

In this mode of operations, the GPS-RTK, which has a high refresh rate, has been configured to deliver an order at a certain speed, while the two communication channels between the SPC and pilot separate the information (one for the location inputs from the port of the GPS of the pilot and the other for the exchange of the data from the telemetry and planning of the mission that goes to the USB port). In other words, two communication cables are used: one for the GPS that communicates with the NMEA protocol and the other for the telemetry that communicates with the MavLink protocol (which is not compiled in the RPA but rather that *mavlinklinclude* is added in the *includes* list, which usually occurs in the *Makefile* thereof). Unlike the previous models, a pursuit per se is started once the position of the threat is estimated and it flies to the closest designed satellite point, when that appears in the optical sensor, and the algorithms are introduced that calculate the position and orientation thereof with respect to the animal until the rotation matrix is completed and from there it reconsiders the position thereof depending on the objective. Here, the sensors are responsible for the change in yaw towards the nearest waypoints when the data is introduced into the GPS-RTK, preventing: on one hand. erratic navigation once the position and direction thereof are known, and on the other, the random and indiscriminate preventative activation of the zoosemiotic packets from the previous designs such as the laser, the consumption of which can exceed 2 amps.

The sensors and the algorithms of the optical sensor are the ones that warn about the threat and the ones responsible for successfully performing the pursuit when it approaches the cell with the highest mass gradient, providing information about the position thereof in a legible manner to the firmware of the pilot that then becomes a peripheral device, while the MavLink protocol extracts information on the telemetry, and the mission planner of the SBC. After obtaining the necessary packets in *sudo apt-get install python-pip* and *sudo apt-get install python-opencv python-wxgtk,* the *MavProxy* application calls the *select.py* folder and starts the execution thereof with *mavproxy.py* (which in turn controls the development thereof from the GCS), which is automatically activated once the SBC is started, because a *screen* has been created in the file *rc.local* and a script (*mavinit.scr*) in the flight controller in order to prevent the reconfiguration thereof in each mission. The NMEA protocol takes advantage of the coordinates of the system, the altitude data and, with the rest of the sensors, creates orders of legible ASCII text (37 bytes) that feed the GPS at a constant rhythm and as long as there is a threat detected by them, by providing a waypoint with a binary status byte. Each time the pilot receives the order to apply the EKF, this signal is used that recovers the information from the nearest three-dimensional coordinates by means of the command *MAV_CMD_DO_SET_HOME,* and it begins a pursuit by heading to one of the waypoints nearest to the objective, while the continuous injection from the NMEA protocol blocks the signal of the next waypoint. The adaptation of these coordinates to those of the NMEA causes a movement to a waypoint that the pilot considers as within the mission. Once the threat has disappeared, the mission is unblocked with the sending of the next waypoints such that the more that are designed, the more precise the pursuit will be. If the sensors continue to detect the threat, the process will be repeated with the activation of the zoosemiotic packets and/or will continue along the next and closest waypoint where it is found in order to not return since it prioritises the longitude parameters first and then the latitude parameters. The system memorises the coordinates where the highest number of triggers of the sensors is detected in the *microSD* (*Secure Digital*)*,* RAM thereof or in the hard drive or EEPROM. This information will enable the threat to be better known and optimise future missions.

### 4.- Fourth biomimetic design: trirotor sparrowhawk.

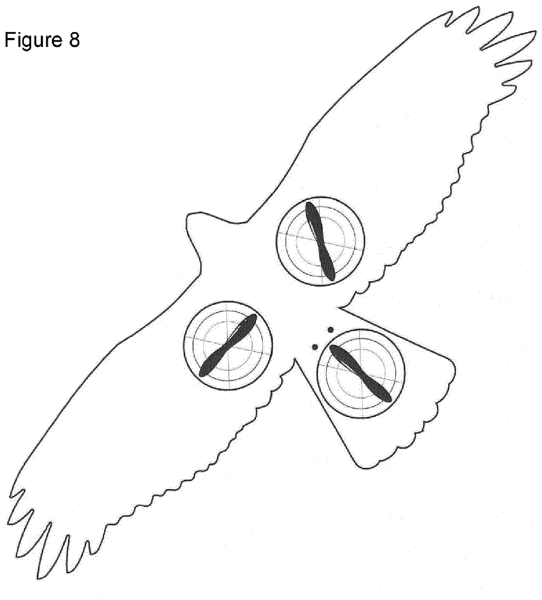

Without restrictive intention, a rotary wing trirotor sparrowhawk has been manufactured for covered and semi-covered crops (such as berries and table grapes and for combatting avian pests in the Iberian Peninsula) (Fig. 8), powered by lithium batteries and polymers that is recharged when it lands in a portable charging station (*Skysense* model). In order to successfully combat these species in this crop, it incorporates sufficient technology on board. Namely: sound system (amplifier with speakers) and laser spirograph. In order to guarantee flight within these plastic tunnels and there is no quality satellite signal, apart from the precision that the autopilot with the GPS-RTK (*Piksi* brand) offers, an anti-collision system has been designed based on the models by *Chee* (for ultrasonic sensors) and *Zhong* (for infrared sensors), such that the RPA will have four infrared sensors (one on each side), the measurements of which will be continuously crossed and sent to the *Pixhawk.* If an obstacle is detected on one side at a defined security distance, it is compared to the measurement from the other side. This difference in voltage is analysed by the SBC (*Raspberry Pi 2* brand), which sends an order by means of the MavLink to the *Pixhawk* in order to move away from the obstacle or maintain the position for a certain time when the front sensor detects an obstacle, continuing with the mission afterwards. It incorporates a Lidar-Lite light detection and ranging module in order to maintain a more precise height when it enters the tunnels since in these crops planted on the ground is combined with planting in pots. The drivers of the animal behaviour and the activation of the devices thereof (/*src*/*drivers*/*zoo*) are created and are introduced into the source file (*zoo.cpp*)*.* In order to prevent the SBC from interpreting the information received by the controller as login information, the access to the system by the serial port is disabled, *sudo nano* /*etc*/*inittab* and the safety of the autopilot located in the PX4IO firmware are modified in order to prevent the manual arming thereof.

In a multirotor, the yaw angle must be taken into account so as to not break the design or the avian flight. For this reason, the configuration is done in *Point to Next Waypoint* (*MIS_YAWMODE 1*) mode so that the head of the bird is always pointing towards the next waypoint (*nose in*) and does not adopt incorrect flight postures.

In order to maintain fear in an open field when the RPA exits the plastic tunnels and moves the intruders farther away from the area, the sound and the laser spirograph have been connected to the orders of the camera by using the *CAM_TRIGG_DIST* function (which is the distance in metres between triggers and *DO_SET_CAM_TRIGG_DIST* which enables it to be activated in flight) and the *CAM_TRIG_TYPE* command of the shutter of the camera (the time of which is regulated in *CAM_DURATION*) which enables the outlet to relay or to PWM to be used (which establishes the value of the servo in *CAM_SERVO_ON* and *CAM_SERVO_OFF*) depending on the consumption of the connected device. For the charging station, a retractable security system for the connections has been created, the servomotor of which is activated by the landing gear order (*LGR*_ *SERVO_RTRACT* and *LGR_SERVO_DEPLOY*).

## Claims

1. A remotely piloted biomimetic and zoosemiotic aircraft comprising:
- fuselage with typical animal anatomical structure;
- electric propulsion motors;
- flight systems for aerostat, fixed wing, rotary wing, VTOL, ornithopter and false ornithopter;
- power system selected among rechargeable batteries, a fuel cell or both simultaneously;
- backup power source;
- feedback systems;
- portable charging base, camouflaged or not;
- retractable connection system for portable charging station;
- inertial measurement unit made up of inertial modules including digital directional compass, gyroscopes, magnetometers, accelerometers, digital compass and telemetry;
- configurable global navigation satellite system;
- control cards, servomotors and relays for mechanisms for triggering and actuating mobile parts;
- digital anemometer;
- barometer;
- differential pressure sensor;
- distance sensors;
- temperature and relative humidity sensor;
- MQx gas, smoke, chemical, and radioactivity sensor;
- optical sensors;
- microphone, amplifier and speakers;
- sonar;
- communications module including analogue video transmitter and receiver, circular polarisation antenna and wireless connection modules;
- reduced-board or single-board computer;
- Arduino board;
- I/O expansion board;
- LED strobe lighting system;
- active or passive RFID card;
- radio beacon:
- laser devices;
- pressure pump;
- expulsion tank and/or duster/remover;and
- chemical fumigator;
**characterised in that**
- the GPS system is real-time kinematic type;
- flight feathers and tail, primary feathers and patagium are able to be actuated by means of servomotors or relays;
- the laser devices are guns and spirographs;
- fibre optics are applied in order to highlight colours and anatomical areas;
and **in that** it additionally includes:
- water gun;
- soap bubble gun; and
- pyrotechnic launcher.

2. The remotely piloted biomimetic and zoosemiotic aircraft according to claim 1, **characterised in that** when fuel cells are used for power, those with proton-exchange polymer membranes are selected.

3. The remotely piloted biomimetic and zoosemiotic aircraft according to claims 1 or 2, where the feedback systems are selected from among solar panels, Joule thief, Bedini motor or magnet motor.

4. The remotely piloted biomimetic and zoosemiotic aircraft according to any one of claims 1 to 3, **characterised in that** the distance sensors are selected from among ones that are ultrasonic, infrared and lasers, or combinations thereof.

5. The remotely piloted biomimetic and zoosemiotic aircraft according to claim 4, **characterised in that** the distance sensor is a Lidar-Lite laser sensor.

6. The remotely piloted biomimetic and zoosemiotic aircraft according to any one of the preceding claims, **characterised in that** the optical sensors are monocular and/or stereoscopic, FPV, thermal or infrared, ultraviolet, video and photographic vision.

7. The remotely piloted biomimetic and zoosemiotic aircraft according to any one of claims 1 to 6, **characterised in that** the spirographs with LED laser have two motors with two gears that create two movements around themselves in one stationary Cartesian axis creating circles and Lissajous figures.

8. The remotely piloted biomimetic and zoosemiotic aircraft according to any one of claims 1 to 6, wherein the spirographs with LED laser have one motor that makes a gear rotate to which the laser is connected which generates a beam perpendicular to the vehicle.

9. The remotely piloted biomimetic and zoosemiotic aircraft according to any one of claims 1 to 8, wherein the laser gun has two vibrated mirrors to achieve a multitude of points.

10. The remotely piloted biomimetic and zoosemiotic aircraft according to any one of claims 1 to 9, wherein the vehicle has a retractable system for the primary feathers and the patagium, lateral flight feathers or tail, consisting of a tubed tensor cable, connected to both wings, which runs along the leading edge and is connected to a servomotor, and which overcomes the tensor spring of the primary feathers and the extender spring of the patagium, as well as that of the flight feathers.

11. A use of a remotely piloted biomimetic and zoosemiotic aircraft as defined in claims 1 to 10 to scare away animals.

12. The use according to claim 11, wherein the vehicle mimics bird of the orders Falconiformes, Accipitriformes or Strigiformes.

13. The use according to claims 11 or 12, wherein the vehicle is operated with the ability to pursue and navigate via satellite points.

14. The use according to claims 12 or 13, wherein the vehicle is operated with the ability to pursue and navigate autonomously.
